# FASCICULE DE BREVET EUROPEEN

(11) **EP 1 617 550 B1**
(45) Date de publication et mention de la délivrance du brevet: **07.12.2011**
(21) Numéro de dépôt: 05106380.8
(22) Date de dépôt: 12.07.2005
(51) Int. Cl.: H02M 7/04, H04B 1/59

(54) **Circuit d'alimentation adaptable**
Adaptierbare Stromversorgung
Adaptable power supply circuit

(30) Priorité: 13.07.2004 FR 0451511
(43) Date de publication de la demande: 18.01.2006
(73) Titulaire: STMICROELECTRONICS S.A., 92120 Montrouge (FR)
(72) Inventeur: Wuidart, Luc, 83910 Pourrieres (FR)
(74) Mandataire: de Beaumont, Michel

(56) Documents cités:
- US-A1- 2004 104 809

## Description

### Domaine de l'invention

La présente invention concerne le domaine des circuits d'alimentation extrayant leur énergie d'une source de tension alternative dont l'amplitude varie dynamiquement. L'invention s'applique aussi bien à des systèmes alimentés par une source de tension fixe, qu'à des systèmes mobiles récupérant leur alimentation à partir d'une source émettant de l'énergie à distance, donc une tension variable.

Un exemple d'application de la présente invention concerne les transpondeurs téléalimentés qui extraient l'énergie nécessaire à leur fonctionnement du champ électromagnétique rayonné par une antenne d'une borne de lecture-écriture dans le voisinage duquel ils se trouvent. Les transpondeurs électromagnétiques sont basés sur l'emploi d'un circuit oscillant de type LC parallèle, aux bornes duquel est générée une tension alternative dont l'amplitude varie en fonction de la distance entre le transpondeur et la borne.

### Exposé de l'art antérieur

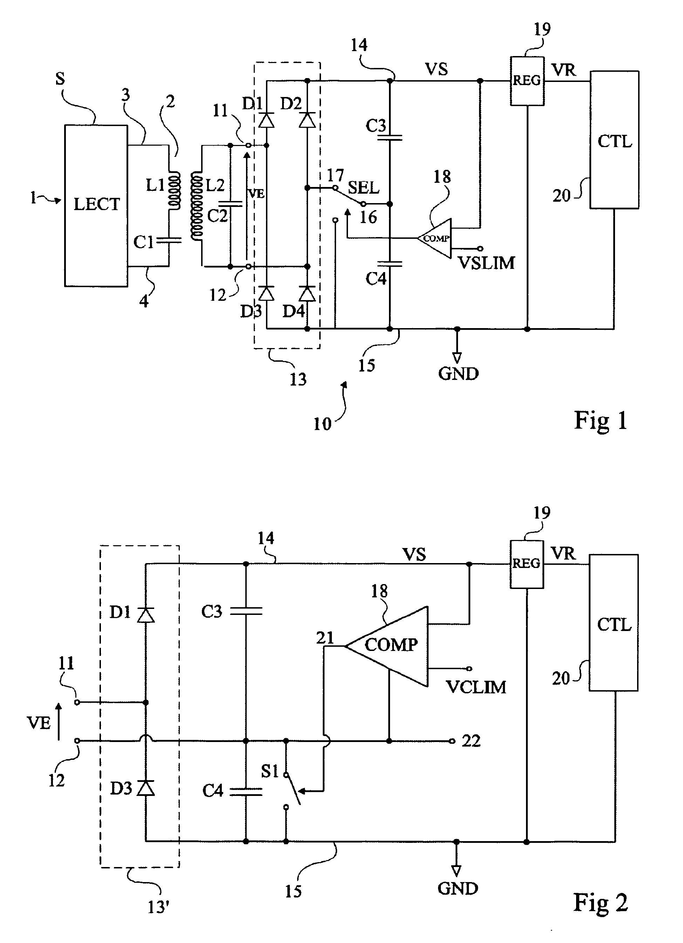

La figure 1 illustre, de façon très schématique et sous forme de blocs, une borne 1 de lecture de transpondeurs électromagnétiques et un transpondeur 10 classique devant communiquer avec cette borne.

Côté borne de lecture, on trouve généralement un circuit oscillant série 2 constitué d'une inductance L1 formant antenne, en série avec un condensateur C1 connecté entre une borne de sortie 3 d'un amplificateur ou coupleur d'antenne (non représenté) et une borne de référence 4 (généralement la masse). Le coupleur d'antenne appartient à un ou plusieurs circuits 5 (LECT) de commande du circuit oscillant et d'exploitation des données reçues et comprend, entre autres, un modulateur-démodulateur et un microprocesseur pour traiter les signaux de commande et de données.

Le circuit 5 de la borne communique généralement avec différents circuits d'entrée-sortie (clavier, écran, moyens de transmission vers un serveur central, etc.) et/ou circuits de traitement non représentés. Ces circuits extraient l'énergie nécessaire à leur fonctionnement d'un circuit d'alimentation (non représenté) connecté, par exemple, au réseau électrique ou à une batterie.

Côté transpondeur 10, une inductance L2, en parallèle avec un condensateur C2, forme un circuit oscillant parallèle (appelé circuit résonant), destiné à capter le champ électromagnétique engendré par le circuit oscillant série (L1, C1) de la borne 1. Le circuit résonant (L2, C2) du transpondeur 10 est accordé sur la fréquence d'une porteuse d'excitation du circuit oscillant (L1, C1) de la borne 1.

Les bornes 11, 12 du circuit résonant (L2, C2), correspondant aux bornes du condensateur C2, sont reliées à deux bornes d'entrée alternative d'un circuit 13 de redressement constitué d'un pont de quatre diodes D1, D2, D3, et D4 de type redressement double alternance. Les bornes d'entrée alternative sont constituées par les points milieux des branches formées par des associations série respectives, des diodes (D1, D3), et des diodes (D2, D4).

Dans un premier type de transpondeurs (non représenté), un condensateur est connecté aux bornes de sortie 14 et 15 du circuit 13 pour stocker l'énergie et lisser la tension redressée.

Dans un deuxième type de transpondeurs tel que représenté en figure 1, on prévoit d'augmenter la portée en autorisant un fonctionnement en doubleur de tension. Une association en série de deux condensateurs C3 et C4 est alors connectée aux bornes de sortie redressée 14 et 15 (GND) du circuit 13. La borne 15 constitue la masse du transpondeur 10.

Lorsque le transpondeur 10 entre dans le champ électromagnétique de la borne 1, une tension alternative VE haute fréquence est engendrée aux bornes du circuit résonant (L2, C2). Cette tension, redressée par le circuit 13 et lissée par les condensateurs C3 et C4, devient une tension VS sur la borne 14. Cette tension VS est appliquée à l'entrée d'un régulateur 19 (REG) dont le rôle est de fournir une tension régulée VR à un circuit 20 (CTL). Le circuit 20 comprend essentiellement un microprocesseur et une mémoire (non représentés).

Le point milieu de l'association série des diodes (D2, D4) est connecté à une première borne 17 d'un sélecteur (SEL) dont une deuxième borne est reliée à la masse GND. La borne 14 est reliée à une première entrée d'un comparateur 18 (COMP) dont une deuxième entrée reçoit un seuil de tension VSLIM. Le sélecteur SEL commute une borne 16 connectée au point milieu de l'association série des condensateurs C3 et C4 sur l'une ou l'autre des bornes 15 et 17. La sortie du comparateur 18 commande le sélecteur SEL en fonction de la tension VS par rapport au seuil VSLIM.

Dans l'exemple de la figure 1, la tension VE récupérée aux bornes 11, 12 du transpondeur dans le champ de la borne 1 dépend de la distance qui sépare le transpondeur de la borne et du couplage entre les circuits oscillants respectifs de la borne et du transpondeur. Pour disposer d'un système ayant une portée relativement grande (de l'ordre de 20 à 50 centimètres), on est contraint de passer d'un redressement double alternance en distance proche, à un redressement en doubleur de tension lorsque le transpondeur est éloigné de la borne. Le mode de redressement bascule quand la tension VS atteint le seuil VSLIM. La tension VSLIM représente le minimum d'alimentation des circuits 19 et 20. Ce seuil VSLIM correspond également à la distance maximale entre la borne 1 et le transpondeur 10 à partir de laquelle l'énergie téléalimentée fournie au transpondeur devient insuffisante pour alimenter les circuits 19 et 20.

Lorsque le transpondeur 10 est proche de la borne 1, la tension VS est supérieure au seuil VSLIM. La sortie du comparateur 18 connecte la borne 16 du sélecteur SEL sur la borne 15, court-circuitant le condensateur C4. Le circuit 13 fonctionne en redressement double alternance. Les paires de diodes (D1, D4) et (D2, D3) sont alternativement mises en conduction à la fréquence de la tension VE. Seul le condensateur C3 stocke l'énergie et est chargé à la tension VS avec une fréquence double de celle de la tension alternative VE. La tension VS est en moyenne égale à une fois la tension d'entrée VE redressée.

En éloignant le transpondeur 10 de la borne 1, la tension VS devient inférieure au seuil VSLIM. La sortie du comparateur 18 commute la borne 16 du sélecteur SEL sur la borne 17. Cette commutation configure le circuit 13 en redressement de doubleur de tension. Seules les diodes D1 et D3 sont alternativement mises en conduction à la fréquence de la tension VE. L'énergie est alternativement stockée dans chacun des condensateurs C3 et C4. La tension présente aux bornes de chaque condensateur C3 et C4 est en moyenne égale à une fois la tension d'entrée VE redressée. La tension VS est alors égale, en moyenne, au double de la tension d'entrée VE redressée. Un inconvénient est que, quand un transpondeur se trouve près de la borne, en redressement double alternance, il reçoit une énergie trop importante par rapport à ses besoins.

Un problème qui se pose alors lorsque les circuits oscillants de la borne et du transpondeur sont très proches l'un de l'autre est que, s'ils sont accordés, l'énergie transmise de la borne vers le transpondeur est telle que celui-ci chauffe. Cet effet thermique peut avoir pour conséquence une déformation de la carte en matière plastique contenant le transpondeur.

Plus généralement, un inconvénient des systèmes alimentés par des sources de tensions alternatives à grande variation dynamique, est qu'ils modifient l'amplitude de la tension redressée sans adapter la fréquence de stockage de l'énergie aux besoins de la charge, constituée par le transpondeur dans le cas de la figure 1.

Un autre inconvénient du système de la figure 1 est qu'il nécessite de prévoir des moyens de protection contre les surcharges, compatibles avec un stockage résultant d'un redressement double alternance, et qui sont souvent de nature dissipative.

### Résumé de l'invention

La présente invention vise à proposer une nouvelle solution qui pallie les inconvénients de solutions classiques, notamment dans le cas des systèmes alimentés par sources de tension alternative à variation dynamique.

L'invention vise également, dans le cas des transpondeurs, à réduire le stockage de l'énergie téléalimentée à distance proche de la borne lecture-écriture.

L'invention vise en outre à proposer une solution particulièrement simple à mettre en oeuvre.

Pour atteindre ces objets ainsi que d'autres, la présente invention prévoit un circuit d'alimentation comportant un circuit de redressement d'une tension alternative et deux éléments de stockage d'énergie, le circuit de redressement fournissant une tension redressée à au moins un des éléments de stockage et une tension de sortie étant fournie par au moins un des éléments de stockage, et au moins un élément de commutation pour basculer le fonctionnement du circuit entre un état de fourniture d'une tension relativement élevée et un état de fourniture d'une tension relativement faible, le deuxième état configurant le circuit de redressement en fonctionnement mono-alternance.

Selon un mode de réalisation de la présente invention, l'élément de commutation court-circuite un des éléments de stockage.

Selon un mode de réalisation de la présente invention, le circuit de redressement et les éléments de stockage sont respectivement formés d'associations en série de deux diodes et de deux condensateurs, la tension alternative étant appliquée aux points milieu respectifs desdites associations en série connectées en parallèle.

Selon un mode de réalisation de la présente invention, les condensateurs sont de même valeur.

Selon un mode de réalisation de la présente invention, le circuit d'alimentation comporte en outre un comparateur d'une information représentative de la dissipation dans la charge alimentée par rapport à un seuil.

Selon un mode de réalisation de la présente invention, ledit comparateur compare la tension de sortie à un seuil prédéterminé, supérieur au maximum que peut atteindre ladite tension relativement élevée.

Selon un mode de réalisation de la présente invention, le seuil est réglable.

L'invention prévoit également un transpondeur comprenant :
un circuit résonant fournissant une tension variable à partir d'un champ électromagnétique rayonné par une borne ; et
un circuit d'alimentation fournissant une tension de sortie.

Selon un mode de réalisation de la présente invention, ladite tension relativement élevée est choisie supérieure à la tension minimum de fonctionnement en limite de portée.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment est destinée à exposer l'état de la technique et le problème posé.
la figure 2 représente, de façon très schématique, un premier mode de réalisation du circuit de redressement et de régulation de l'énergie stockée selon l'invention ; et
la figure 3 représente, de façon très schématique, un deuxième mode de réalisation du circuit de redressement et de régulation de l'énergie stockée selon l'invention.

### Description détaillée

Les mêmes éléments ont été désignés par de mêmes références aux différentes figures. Par souci de clarté, seuls les éléments nécessaires à la compréhension de l'invention ont été représentés aux figures et seront décrits par la suite.

Une caractéristique de la présente invention est de réduire l'énergie stockée à partir d'une source de tension alternative redressée lorsque celle-ci dépasse les besoins de la charge, sans recourir à un système spécifique de dissipation.

La figure 2 représente, de façon schématique, un mode de réalisation d'un circuit de redressement et de régulation de l'énergie stockée à partir d'une source de tension dynamiquement variable. L'exemple de la figure 2 sera décrit en relation avec une application aux transpondeurs électromagnétiques dont la tension alternative varie dynamiquement en fonction de la distance entre le transpondeur et la borne.

Dans cet exemple, lorsque le transpondeur 10 (figure 1) entre dans le champ électromagnétique de la borne 1, une tension alternative VE haute fréquence est engendrée aux bornes 11 et 12 du circuit résonant (L2, C2). Un circuit 13' de redressement constitué par une association série de deux diodes D1 et D3 est en parallèle avec deux condensateurs C3 et C4 en série qui relient la cathode de la diode D1 à l'anode de la diode D3. Les bornes d'entrée 11 et 12 sont constituées par des points milieux des associations série respectives, des diodes D1 et D3, et des condensateurs C3 et C4. La tension alternative VE, redressée par les diodes D1 et D3 et lissée par les condensateurs C3 et C4, devient une tension VS entre une borne 14 correspondant à la cathode de la diode D1 et une borne 15 correspondant à l'anode de la diode D3. La tension VS est appliquée sur une première borne d'un comparateur 18 (COMP) dont une deuxième borne reçoit un seuil de tension (VCLIM). La sortie 21 du comparateur 18 commande un interrupteur S1, dont les bornes relient le point milieu 22 (ici confondu avec la borne 12) de l'association en série des condensateurs C3 et C4 à la masse 15. La tension VS est appliquée sur une entrée d'un régulateur 19 (REG) dont une sortie fournit une tension VR à un circuit 20 (CTL). Comme précédemment, les circuits 19 et 20 sont également reliés à la masse 15 du transpondeur.

La comparaison entre les tensions VS et VCLIM est référencée par rapport à la tension présente sur la borne 22. Cela revient à comparer la tension aux bornes 14, 22 du condensateur C3 au seuil VCLIM.

Lorsque le transpondeur 10 (figure 1) est loin de la borne 1, la tension aux bornes du condensateur C3 est inférieure au seuil VCLIM, la sortie 21 commande l'ouverture de l'interrupteur S1. Seules les diodes D1 et D3 sont alternativement mises en conduction à la fréquence de la tension VE. L'énergie est alternativement stockée dans chacun des condensateurs C3 et C4. La tension présente aux bornes de chaque condensateur C3 ou C4 est en moyenne égale à une fois la tension d'entrée VE redressée. La tension VS est égale, en moyenne, au double de la tension d'entrée VE redressée. Le circuit 13' fonctionne alors en mode doubleur de tension. Les éléments de stockage C3 et C4 sont généralement dimensionnés pour maximiser la distance de téléalimentation du transpondeur 10 en redressement doubleur de tension.

Lorsque le transpondeur 10 est proche de la borne 1, la tension aux bornes du condensateur C3 est supérieure ou égale au seuil VCLIM, la sortie 21 commande la mise en conduction de l'interrupteur S1, reliant la borne 22 à la masse 15. L'interrupteur S1 court-circuite alors le condensateur C4. Seule la diode D1 est mise en conduction à la moitié de la fréquence de la tension VE. L'énergie est stockée dans le seul condensateur C3 au rythme d'une alternance sur deux de la tension VE. La tension présente aux bornes de C3 est en moyenne égale à une fois la tension d'entrée VE redressée, diminuée de la chute de tension résultant de la consommation des circuits 19 et 20 pendant les alternances de la tension VE où la diode D1 n'est pas conductrice. La tension VS est égale, en moyenne, à moins d'une fois la tension d'entrée VE redressée. Le circuit 13' est alors configuré en redressement mono-alternance.

En rapprochant le transpondeur 10 (figure 1) de la borne 1, la tension VS atteint le seuil VCLIM. L'interrupteur S1 est mis en conduction configurant le circuit 13' en redressement mono-alternance. Le condensateur C3 est alors seul à être rechargé au rythme de la fréquence moitié de la tension VE et à une tension plus petite qu'une fois VE. L'énergie stockée dans le condensateur C3 est alors réduite d'au moins un facteur deux par rapport à un mode de redressement à double alternance.

Le seuil VCLIM est choisi à une tension au-delà de laquelle l'énergie stockée en mode doubleur dans les condensateurs C3 et C4 devient telle qu'elle entraîne une surchauffe par dissipation dans le transpondeur 10.

En variante, on pourra prévoir de remplacer la mesure de la tension VS à la borne 14 par une mesure en température, le seuil VCLIM correspondant alors à un seuil de température maximale à ne pas dépasser.

On pourra également prévoir de faire varier le seuil de tension VCLIM en fonction d'un signal de commande fourni, par exemple, par le circuit 20. Le seuil VCLIM pourra aussi être réalisé de manière numérique.

Dans l'exemple de la figure 2, les condensateurs C3 et C4 sont de préférence choisis identiques. Toutefois, on peut prévoir de choisir des condensateurs C3 et C4 de valeurs différentes. L'association série des condensateurs C3 et C4 forme alors un diviseur de la tension VS. Ceci a pour effet de générer des tensions différentes aux bornes de chacun des condensateurs C3 et C4 afin, par exemple, de fournir différentes tensions d'alimentation pour les besoins des circuits 20.

Selon une variante de réalisation, l'interrupteur S1 est connecté en parallèle sur le condensateur C3, le comparateur 18 est placé entre la borne 22 et la masse 15. Le comparateur 18 compare alors la tension présente sur la borne 22 au seuil VCLIM. Dans ce cas, seul le condensateur C4 stocke l'énergie en redressement mono-alternance.

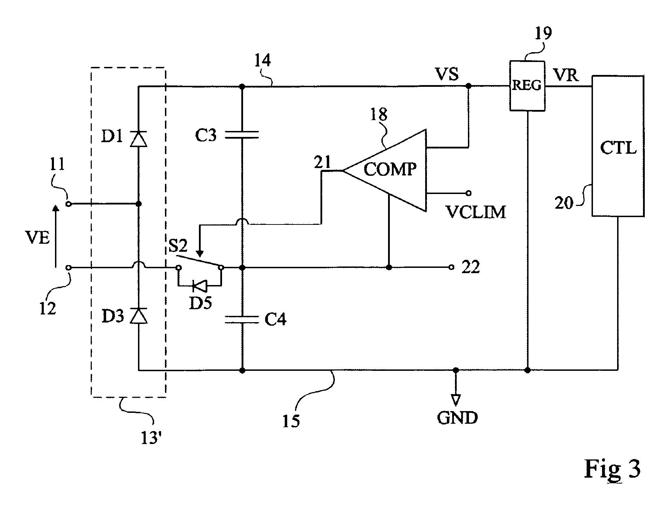

La figure 3 représente, de façon très schématique, un deuxième mode de réalisation du circuit de redressement et de régulation de l'énergie stockée à partir d'une source de tension dynamiquement variable. Seules les différences par rapport au premier mode de réalisation de la figure 2 seront décrites.

Dans l'exemple de la figure 3, l'interrupteur S1 (figure 2) est remplacé par un interrupteur S2 entre les bornes 12 et 22. La borne de commande de l'interrupteur S2 est reliée à la sortie 21 du comparateur 18. En parallèle avec l'interrupteur S2, une diode D5 est connectée à la borne 12 par sa cathode, et à la borne 22 par son anode.

A l'inverse de l'exemple de la figure 2, tant que la tension VS est inférieure à la tension VCLIM, l'interrupteur S2 est maintenu en conduction par la sortie 21 du comparateur 18. Le circuit 13' est alors configuré en redressement doubleur de tension.

Lorsque le transpondeur 10 (figure 1) se rapproche de la borne 1 et que la tension VS est égale au seuil VCLIM, la sortie 21 commande l'ouverture de l'interrupteur S2. Les diodes D1 et D5 sont alors conductrices. Seul le condensateur C3 stocke l'énergie à la moitié de la fréquence de la tension VE. Comme décrit dans la figure 2, la tension VS est égale, en moyenne, à moins d'une fois la tension d'entrée VE redressée. Le circuit 13' est alors configuré en redressement mono-alternance, réduisant l'énergie stockée dans le condensateur C3 d'au moins un facteur deux par rapport à un mode de redressement à double alternance. De préférence, l'interrupteur S2 est formé par un transistor MOS de type N (ou de type P) dont la diode parasite constitue la diode D5. Les techniques de commande de grille des transistors MOS sont bien connues de l'homme du métier et ne posent ici aucun problème particulier.

En variante, on pourra également prévoir d'inverser le sens de conduction de la diode D5 en reliant son anode à la borne 12 et sa cathode à la borne 22. Quand la tension VS est égale à VCLIM, l'interrupteur est ouvert et les diodes D3 et D5 sont alors en conduction. Seul le condensateur C4 stocke l'énergie selon le même principe que celui décrit dans la figure 3.

Un avantage de la présente invention est qu'elle adapte l'énergie stockée dans les éléments de stockage aux besoins de la charge d'un circuit d'alimentation dont la source de tension varie dynamiquement.

Un autre avantage de la présente invention est qu'elle réduit l'énergie stockée à partir d'une source de tension alternative redressée lorsque celle-ci dépasse les besoins de la charge, sans recourir à un système spécifique de dissipation.

Un autre avantage de la présente invention est qu'elle évite la surchauffe du transpondeur lorsque celui-ci est en couplage proche de la borne.

La présente invention permet d'augmenter la sensibilité du lecteur en couplage proche, en réduisant le risque de saturation du démodulateur du lecteur consécutive à une tension redressée du transpondeur trop grande.

Bien que l'invention soit décrite en relation avec la mesure de la tension redressée VS aux bornes des éléments de stockage, on pourra prévoir de changer de mode de redressement à partir de toute autre information ou signal lié à cette tension redressée.

Bien entendu, la présente invention est susceptible de diverses variantes et modifications qui apparaîtront à l'homme de l'art. En particulier, le dimensionnement des éléments de stockage, ainsi que le seuil de basculement du mode de redressement dépendent de l'application et, notamment de la fréquence de la source de tension alternative.

## Revendications

1. Circuit d'alimentation comportant un circuit de redressement (13') d'une tension alternative (VE) et deux éléments de stockage d'énergie (C3, C4), le circuit de redressement fournissant une tension redressée à au moins un des éléments de stockage et une tension de sortie (VS) étant fournie par au moins un des éléments de stockage, le circuit comportant au moins un élément de commutation (S1, S2) pour basculer le fonctionnement du circuit entre un état de fourniture d'une tension relativement élevée et un état de fourniture d'une tension relativement faible, **caractérisé en ce que** le deuxième état configure le circuit de redressement en fonctionnement mono-alternance.

2. Circuit selon la revendication 1, dans lequel l'élément de commutation (S1) court-circuite un des éléments de stockage.

3. Circuit selon la revendication 2, dans lequel le circuit de redressement (13') et les éléments de stockage sont respectivement formés d'associations en série de deux diodes (D1, D3) et de deux condensateurs (C3, C4), la tension alternative (VE) étant appliquée aux points milieu respectifs (11, 12) desdites associations en série connectées en parallèle.

4. Circuit selon la revendication 3, dans lequel les condensateurs (C3, C4) sont de même valeur.

5. Circuit selon l'une quelconque des revendications 1 à 4, comportant en outre un comparateur (18) d'une information représentative de la dissipation dans la charge alimentée par rapport à un seuil (VSLIM).

6. Circuit selon la revendication 5, dans lequel ledit comparateur (18) compare la tension de sortie (VS) à un seuil prédéterminé (VSLIM), supérieur au maximum que peut atteindre ladite tension relativement élevée.

7. Circuit selon l'une quelconque des revendications 1 à 4, dans lequel le seuil (VSLIM) est réglable.

8. Transpondeur comportant :
un circuit résonant (L2, C2) fournissant une tension variable (VE) à partir d'un champ électromagnétique rayonné par une borne ; et
un circuit d'alimentation conforme à l'une quelconque des revendications 1 à 7.

9. Transpondeur selon la revendication 8, dans lequel ladite tension relativement élevée est choisie supérieure à la tension minimum de fonctionnement en limite de portée.

## Claims

1. A power circuit comprising a circuit (13') for rectifying an A.C. voltage (VE) and two power storage elements (C3, C4), the rectifying circuit providing a rectified voltage to at least one of the storage elements and an output voltage (VS) being provided by at least one of the storage elements, the circuit comprising at least one switching element (S1, S2) for switching the circuit operation between a state of provision of a relatively high voltage and a state of provision of a relatively low voltage, **characterized in that** the second state configures the rectifying circuit in halfwave operation.

2. The circuit of claim 1, wherein the switching element (S1) short-circuits one of the storage elements.

3. The circuit of claim 2, wherein the rectifying circuit (13') and the storage elements are respectively formed of series associations of two diodes (D1, D3) and of two capacitors (C3, C4), the A.C. voltage (VE) being applied to the respective midpoints (11, 12) of said series associations connected in parallel.

4. The circuit of claim 3, wherein the capacitors (C3, C4) are of same value.

5. The circuit of any of claims 1 to 4, further comprising a comparator (18) for comparing data representative of the dissipation in the supplied load with a threshold (VSLIM).

6. The circuit of claim 5, wherein said comparator (18) compares the output voltage (VS) with a predetermined threshold (VSLIM), greater than the maximum that can be reached by said relatively high voltage.

7. The circuit of any of claims 1 to 4, wherein the threshold (VSLIM) is settable.

8. A transponder, comprising:
a resonant circuit (L2, C2) providing a variable voltage (VE) from an electromagnetic circuit radiated by a terminal; and
the power supply circuit of any of claims 1 to 7.

9. The transponder of claim 8, wherein said relatively high voltage is selected to be greater than the minimum operation voltage at the range limit.

## Patentansprüche

1. Leistungsschaltung, die eine Schaltung (13') zum Gleichrichten einer Wechselstrom-Spannung (VE) und zwei Leistungsspeicherelemente (C3, C4) aufweist, wobei die Gleichrichterschaltung eine gleichgerichtete Spannung zu mindestens einer der Speicherelemente liefert und eine Ausgangsspannung (VS), die zu mindestens einer der Speicherelemente geliefert wird, wobei die Schaltung zumindest ein Schaltelement (S1, S2) aufweist, um den Schaltungsbetrieb zwischen einem Zustand des Lieferns einer vergleichsweise hohen Spannung und einem Zustand des Lieferns einer vergleichsweise geringen Spannung umzuschalten,
**dadurch gekennzeichnet, dass** der zweite Zustand die Gleichrichterschaltung in einem Halbwellenbetrieb konfiguriert.

2. Schaltung nach Anspruch 1, wobei das Schaltelement (S1) eines der Speicherelemente kurzschließt.

3. Schaltung nach Anspruch 2, wobei die Gleichrichterschaltung (13') und die Speicherelemente jeweils aus Reihenanordnungen von zwei Dioden (D1, D3) und aus zwei Kondensatoren (C3, C4) geformt sind, wobei die Wechselstrom-Spannung (VE) an die jeweiligen Mittelpunkte (11, 12) der Reihenanordnungen angelegt ist, die parallel verbunden sind.

4. Schaltung nach Anspruch 3, wobei die Kondensatoren (C3, C4) den gleichen Wert haben.

5. Schaltung nach einem der Ansprüche 1 bis 4, die weiter einen Komparator (18) aufweist, um Daten, die die Verteilung der gelieferten Last darstellen, mit einer Schwelle (VSLIM) zu vergleichen.

6. Schaltung nach Anspruch 5, wobei der Komparator (18) die Ausgangsspannung (VS) mit einer vorbestimmten Schwelle (VSLIM) vergleicht, und zwar von mehr als dem Maximalwert, der von der vergleichsweise hohen Spannung erreicht werden kann.

7. Schaltung nach einem der Ansprüche 1 bis 4, wobei die Schwelle (VSLIM) einstellbar ist.

8. Transponder der Folgendes aufweist:
eine Resonanzschaltung (L2, C2), die eine variable Spannung (VE) ausgehend von einer elektromagnetischen Schaltung liefert, die von einem Anschluss ausgestrahlt wird; und
die Leistungsversorgungsschaltung nach einem der Ansprüche 1 bis 7.

9. Transponder nach Anspruch 8, wobei die vergleichsweise hohe Spannung so ausgewählt ist, dass sie größer ist als die minimale Betriebsspannung bei der Reichweite.
